# EUROPÄISCHE PATENTSCHRIFT

(11) **EP 2 261 589 B1**
(45) Veröffentlichungstag und Bekanntmachung des Hinweises auf die Patenterteilung: **19.03.2014**
(21) Anmeldenummer: 10163640.5
(22) Anmeldetag: 21.05.2010
(51) Int. Cl.: F41G 3/06, G01C 3/08, G01S 7/481

(54) **Lasergerät zur elektrooptischen Distanzmessung**
Laser device for electro-optical distance measurement
Appareil laser pour la mesure électro-optique de distances

(30) Priorität: 29.05.2009 DE 102009026618
(43) Veröffentlichungstag der Anmeldung: 15.12.2010
(73) Patentinhaber: HILTI Aktiengesellschaft, 9494 Schaan (LI); ESW GmbH, 22876 Wedel (DE)
(72) Erfinder: Gogolla, Torsten, 9494 Schaan (LI); Winter, Andreas, 6800 Feldkirch (AT); Seifert, Helmut, 07616 Serba (DE); Schusser, Gero, 07745 Jena (DE)

(56) Entgegenhaltungen:
- WO-A1-97/11399
- US-A- 5 291 263
- US-A- 5 517 297
- US-B1- 6 229 598

## Beschreibung

Die vorliegende Erfindung betrifft ein handgehaltenes Lasergerät zur elektrooptischen Messung der Distanz eines Zielobjekts zu einer Referenzmarke bestehend aus einem Gehäuse, wobei das Gehäuse eine Austrittsöffnung zum Auskoppeln eines Laserstrahls aus dem Lasergerät aufweist, einer koaxialen Messeinrichtung mit einer Strahlquelle, einem Detektor, einer Strahlformungsoptik und einer Strahlteilungsoptik, wobei die Messeinrichtung einen sichtbaren Laserstrahl aussendet und aus dem von dem Zielobjekt kommenden Empfangsstrahl einen Distanzwert ermittelt, einer Anzeigeeinrichtung zur Anzeige des Distanzwertes, einer Bedieneinrichtung zur Bedienung des Lasergerätes und zum Start der Distanzmessung und einer optischen Zieleinrichtung zur Ausrichtung des Laserstrahls auf das Zielobjekt, wobei die optische Zieleinrichtung einen Visiereinblick, über den ein Anwender in die optische Zieleinrichtung schaut, und eine Umlenkoptik, die den von der Messeinrichtung ausgesandten Laserstrahl in Richtung der Austrittsöffnung umlenkt, aufweist.

Handgehaltene Lasergeräte zur elektrooptischen Distanzmessung sind aus dem Stand der Technik bekannt und werden kommerziell vertrieben. Diese Laserdistanzmessgeräte senden einen modulierten Laserstrahl aus, der auf die Oberfläche eines Zielobjektes, dessen Distanz zum Lasergerät zu ermitteln ist, ausgerichtet ist. Das Licht des von der Oberfläche des Zielobjektes reflektierten oder gestreuten Laserstrahls, im Folgenden Empfangsstrahl genannt, wird vom Laserdistanzmessgerät detektiert und zur Ermittlung der Distanz verwendet. Der Anwendungsbereich derartiger Laserdistanzmessgeräte umfasst in der Regel Entfernungen von einigen Zentimetern bis zu einigen hundert Metern.

Die aus dem Stand der Technik bekannten handgehaltenen Laserdistanzmessgeräte lassen sich entsprechend der Anordnung der Sende- und Empfangseinrichtungen in zwei Kategorien unterteilen, in biaxiale Anordnungen, bei denen die optischen Achsen der Sende- und Empfangseinrichtungen parallel versetzt zueinander verlaufen, und koaxiale Anordnungen, bei denen die optischen Achsen der Sende- und Empfangseinrichtungen übereinander liegen. Biaxiale Anordnungen haben den Vorteil, dass keine Strahlteilung zur Trennung des ausgesandten Laserstrahls und des vom Zielobjekt kommenden Empfangsstrahls erforderlich ist und dass Sende- und Empfangszweig gut voneinander separierbar sind, wodurch optisches Übersprechen weitgehend vermeidbar ist. Allerdings besteht unter anderem der Nachteil, dass es im Bereich kurzer Entfernungen aufgrund einer Parallaxe zu Detektionsproblemen kommen kann: Die Abbildung des Zielobjektes auf die Detektoroberfläche verschiebt sich mit abnehmender Entfernung von der optischen Achse der Empfangseinrichtung weg und erfährt außerdem eine Variation des Strahlquerschnittes in der Detektorebene. Koaxiale Anordnungen besitzen den Vorteil der Parallaxefreiheit und des kostengünstigeren Aufbaus. Der Nachteil ist aber das nicht vermeidbare optische Übersprechen von der Sendeeinheit zur Empfangseinheit, da für beide Einheiten derselbe optische Kanal verwendet wird. Das optische Übersprechen führt zu einem zyklischen Distanzmessfehler.

Im Baugewerbe werden handgehaltene Laserdistanzmessgeräte unter anderem zur Distanzmessung in Innenräumen eingesetzt, in denen der Laserstrahl auch über große Distanzen (> 50 m) mit dem bloßen Auge wahrgenommen werden kann. Wenn man jedoch beim Außeneinsatz auf Zielobjekte mit hoher Umfeldleuchtdichte zielt, wie bspw. eine sonnenbeschienene Wand, ist der Laserstrahl auf dem Zielobjekt nur schwer oder überhaupt nicht mehr zu sehen. Zur Verbesserung der Sichtbarkeit wäre eine Erhöhung der Laserleistung denkbar. Höhere Laserleistungen sind jedoch aus Sicherheitsgründen nicht zulässig. Die maximale Leistung eines Laserdistanzmessgerätes ist durch die Laserklasse festgelegt. Bei Lasern der Klasse 2, die die bekannten Laserdistanzmessgeräte umfasst, darf eine maximale Leistung von 1 mW nicht überschritten werden. Um die Position des Laserstrahls auf dem Zielobjekt für den Anwender sichtbar zu machen, werden Laserdistanzmessgeräte mit einer optischen Zieleinrichtung ausgestattet

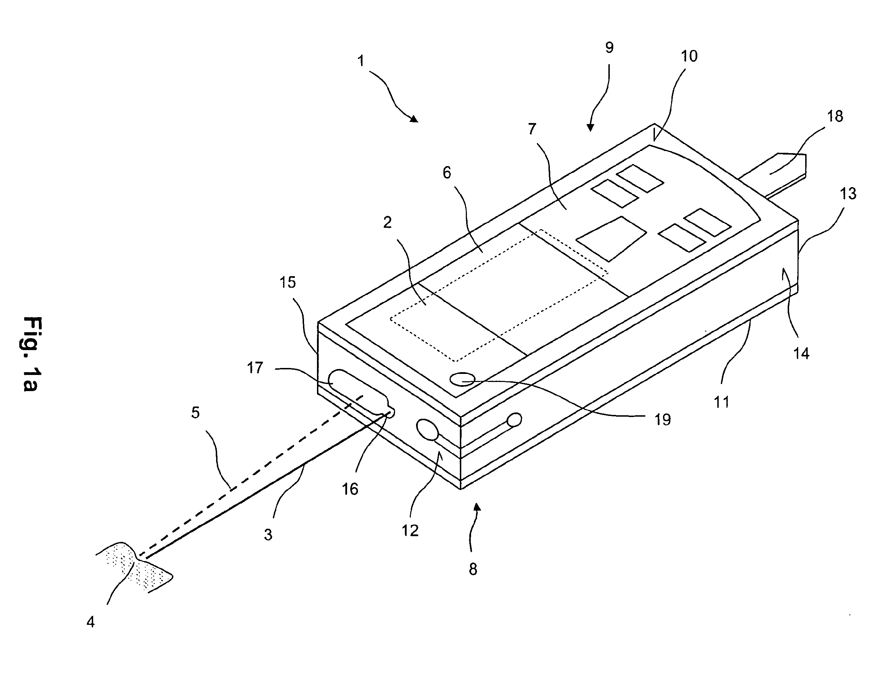

**Fig. 1a** zeigt ein bekanntes handgehaltenes Lasergerät **1** zur elektrooptischen Distanzmessung, im Folgenden als Laserdistanzmessgerät 1 bezeichnet, mit einer Messeinrichtung **2,** die einen Laserstrahl **3** auf ein Zielobjekt **4** ausrichtet und aus dem Licht des vom Zielobjekt 4 reflektierten oder gestreuten Laserstrahls, das als Empfangsstrahl **5** bezeichnet wird, einen Distanzwert ermittelt, mit einer Anzeigeeinrichtung **6** zur Anzeige des Distanzwertes sowie einer Bedieneinrichtung **7** zur Bedienung des Laserdistanzmessgerätes 1 und zum Starten der Distanzmessung. Das Laserdistanzmessgerät 1 weist außerdem eine optische Zieleinrichtung **8** auf, die die Distanzmessung besonders bei Außenmessungen oder bei schlechten Sichtverhältnissen erleichtern soll, wenn der Laserstrahl 3 mit bloßem Auge auf dem Zielobjekt 4 schlecht oder nicht mehr sichtbar ist.

Das Laserdistanzmessgerät 1 ist von einem Gehäuse **9** umgeben. Die Anzeige- und Bedieneinrichtungen 6, 7 sind in eine Oberseite **10** des Gehäuses 9 eingebettet. Um einen hohen Bedienkomfort bei der Bedienung des Laserdistanzmessgerätes 1 und der Anzeige des Distanzwertes zu gewährleisten, sind die Oberseite 10 und die der Oberseite 10 gegenüberliegende Unterseite **11** des Gehäuses 9 die beiden größten Gehäuseflächen des Laserdistanzmessgerätes 1. Die an die Oberseite 10 angrenzenden Vorder- und Hinterseiten 12, 13 sowie die Seitenflächen 14, 15 des Gehäuses 9 sind möglichst klein ausgebildet, um ein handliches Laserdistanzmessgerät 1 aufzubauen.

Der Austritt des Laserstrahls 3 aus dem Gehäuse 9 erfolgt über eine Austrittsöffnung 16, die an der Vorderseite 12 des Gehäuses 9 angeordnet ist, wobei die optische Achse des Laserstrahls 3 senkrecht zur Vorderseite 12 ausgerichtet ist. Der vom Zielobjekt 4 kommende Empfangsstrahl 5 tritt über eine Eintrittsöffnung 17 in das Laserdistanzmessgerät 1 ein.

Die Distanzmessung zu dem Zielobjekt 4 erfolgt in Bezug auf eine am Laserdistanzmessgerät befindliche Referenzmarke. Bei dem bekannten Laserdistanzmessgerät 1 werden die Vorderseite 12, die Hinterseite 13, eine Anschlagspitze 18 oder Messverlängerungen (nicht gezeigt) als Referenzmarken verwendet. Die Umschaltung zwischen den Referenzmarken erfolgt über eine Umschalteinrichtung **19** oder automatisch, bspw. wenn die Anschlagspitze 18 um 180° ausgeklappt ist.

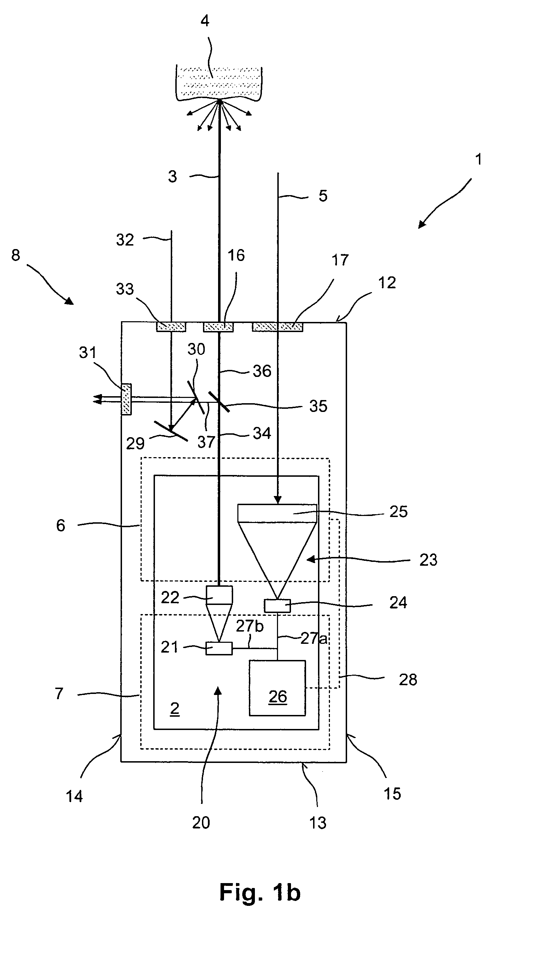

**Fig. 1b** zeigt das bekannte handgehaltene Laserdistanzmessgerät 1 der Fig. 1a in einer Ansicht von innen mit der Messeinrichtung 2 und der optischen Zieleinrichtung 8. Die Messeinrichtung 2 umfasst eine Sendeeinrichtung **20** mit einer Strahlquelle **21** und einer ersten Strahlformungsoptik **22,** eine Empfangseinrichtung **23** mit einem Detektor **24** und einer zweiten Strahlformungsoptik **25** sowie eine Auswerteeinrichtung **26.** Die Sende- und Empfangseinrichtungen 20, 23 sind biaxial angeordnet, d.h. ihre optischen Achsen verlaufen parallel zueinander, fallen aber nicht zusammen. Die Auswerteeinrichtung 26 ist über Kommunikationsverbindungen **27a, 27b, 28** mit dem Detektor 24, der Strahlquelle 21 und der Anzeigeeinrichtung 6 verbunden. Sie bestimmt aus der Zeitdifferenz zwischen dem von der Strahlquelle 21 ausgesandten Laserstrahl 3 und dem vom Detektor 24 erfassten Empfangsstrahl 5 den Distanzwert zum Zielobjekt 4.

Die optische Zieleinrichtung 8 weist ein erstes optisches Element **29** und ein zweites optisches Element **30** auf. Der Anwender sieht über einen Visiereinblick **31,** der in der Seitenfläche 14 des Gehäuses 9 angeordnet ist, in die optische Zieleinrichtung 8. Dabei sieht der Anwender auf das zweite optische Element 30. Das vom Zielobjekt 4 kommende Umgebungslicht **32** tritt mit dem Bild des Zielobjektes 4 über eine Eintrittsöffnung **33** in der Vorderseite 12 in die optische Zieleinrichtung 8 ein und trifft auf das erste optische Element 29. Von dort wird es in Richtung des zweiten optischen Elements 30 abgelenkt. Dadurch, dass das Bild des Zielobjektes 4 zweifach an dem ersten und zweiten optischen Element 29, 30 reflektiert wird, entsteht ein aufrecht stehendes, seitenrichtiges Bild des Zielobjektes 4, welches vom Anwender im Visiereinblick 31 wahrgenommen wird.

Im Strahlengang des aus der Messeinrichtung 2 ausgekoppelten Laserstrahls **34** ist ein Strahlteiler **35** angeordnet, der vorzugsweise unter 45° zur optischen Achse des Laserstrahls 34 geneigt ist. Der Strahlteiler 35 ist so ausgebildet, dass der überwiegende Teil des Laserstrahls (z.B. Reflexionsgrad R ≥ 95 %) als transmittierter Laserstrahl **36** durch den Strahlteiler 35 hindurch tritt, während der übrige Teil (z.B. 5 %) als reflektierter Laserstrahl **37** abgelenkt wird. Der reflektierte Laserstrahl 37 durchdringt das zweite optische Element 30 der optischen Zieleinrichtung 8 und kann vom Anwender als heller, nahezu punktförmiger Lichtfleck wahrgenommen werden. Das zweite optische Element 30 ist so ausgebildet, dass es für die Laserwellenlänge λ transmittierend und für den Wellenlängenbereich des vom Zielobjekt 4 ausgehenden Umgebungslichts bis auf einen schmalen Bereich um die Laserwellenlänge λ überwiegend reflektierend ist. Der Anwender sieht beim Blick in die optische Zieleinrichtung 8 das Bild des Zielobjektes 4 und den Lichtfleck des reflektierten Laserstrahls 37, der sich an derselben Position im Bild des Zielobjektes 4 befindet, wie der Laserstrahl 3 auf der Oberfläche des Zielobjektes 4. Über die Positionierung des aus dem reflektierten Laserstrahl 37 resultierenden Lichtpunktes im Bild des Zielobjektes 4 erfolgt die genaue Positionierung des Laserstrahls 3 auf der Oberfläche des Zielobjektes 4.

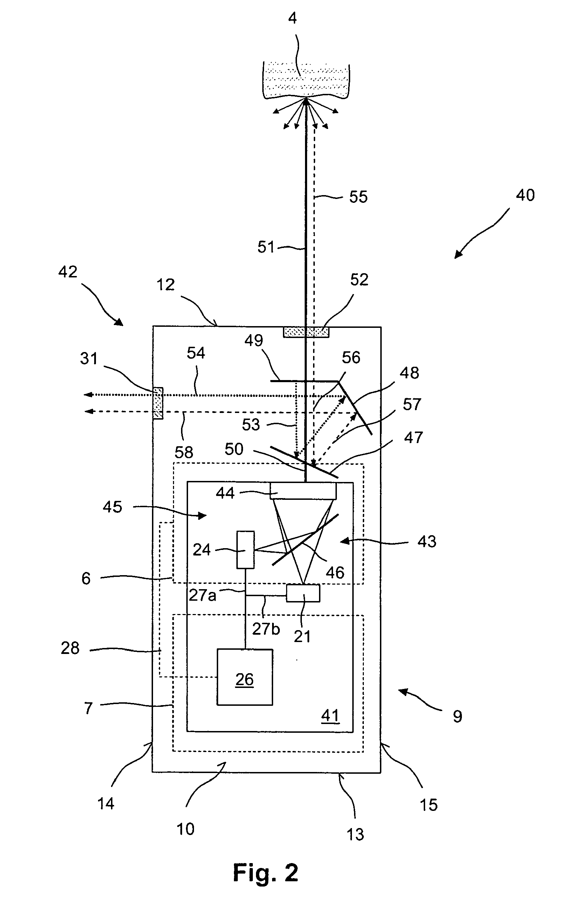

**Fig. 2** zeigt ein weiteres bekanntes handgehaltenes Laserdistanzmessgerät **40** mit einer Messeinrichtung **41** in koaxialern Aufbau und einer optischen Zieleinrichtung **42.** Die Messeinrichtung 41 umfasst eine Sendeeinrichtung **43** mit der Strahlquelle 21 und einer Strahlformungsoptik **44,** eine Empfangseinrichtung **45** mit dem Detektor 24 und der Strahlformungsoptik 44, die Auswerteeinrichtung 26 sowie einen Strahlteiler **46.** Die Sende- und Empfangseinrichtungen 43, 45 sind koaxial angeordnet, d.h. ihre optischen Achsen fallen zusammen. Die Strahlformungsoptik 44 ist ein gemeinsames optisches Element der Sendeund Empfangseinrichtungen 43, 45. Sie ist derart ausgebildet, dass der aus der Strahlquelle 21 ausgekoppelte Laserstrahl kollimiert bzw. auf das Zielobjekt 4 fokussiert und der vom Zielobjekt 4 kommende Empfangsstrahl über den Strahlteiler 46 auf den Detektor 24 fokussiert wird. Mit Hilfe des Strahlteilers 46 wird der aus der Strahlquelle 21 ausgekoppelte Laserstrahl von dem Empfangsstrahl, der vom Zielobjekt 4 reflektiert oder gestreut wird und von dem Detektor 24 erfasst werden soll, getrennt. Der Strahlteiler 46 ist so ausgebildet, dass er für Licht mit der Wellenlänge λ und Polarisationsrichtung des Laserstrahls transmittierend und für Licht mit einer zur Polarisationsrichtung des Laserstrahls senkrechten Polarisationsrichtung reflektierend ausgebildet ist.

Die optische Zieleinrichtung 42 umfasst drei optische Elemente, ein erstes optisches Element **47,** ein zweites optisches Element **48** und ein drittes optisches Element **49.** Das erste und dritte optische Element 47, 49 sind für einen schmalen Wellenlängenbereich um die Laserwellenlänge λ überwiegend transmittierend und für andere Wellenlängen des sichtbaren Spektralbereiches überwiegend reflektierend ausgebildet. Das zweite optische Element 48 ist für alle Wellenlängen des sichtbaren Spektralbereichs überwiegend reflektierend ausgebildet. Der Anwender sieht über den Visiereinblick 31 in der Seitenfläche 14 des Gehäuses 9 in die optische Zieleinrichtung 42. Dabei sieht er auf das zweite optische Element 48.

Der über die Strahlformungsoptik 44 aus der Messeinrichtung 41 ausgekoppelte Laserstrahl **50** tritt überwiegend (z.B. 95 %) durch das erste optische Element 47 hindurch und trifft auf das dritte optische Element 49, an dem der überwiegende Teil (z.B. 95 %) als transmittierter Laserstrahl **51** hindurch tritt und das Laserdistanzmessgerät 40 über eine Austrittsöffnung **52** in der Vorderseite 12 verlässt, während ein kleiner Teil (z.B. 5 %) als reflektierter Laserstrahl **53** in Richtung des ersten optischen Elementes 47 reflektiert wird. Der reflektierte Laserstrahl 53 wird am ersten optischen Element 47 zu einem kleinen Teil (z.B. 5 %) in Richtung des zweiten optischen Elementes 48 reflektiert und von dort als reflektierter Laserstrahl **54** in Richtung des Visiereinblicks 31 abgelenkt. Der in den Visiereinblick 31 schauende Anwender nimmt den Laserstrahl 34 als scharfen Lichtpunkt wahr.

Das vom Zielobjekt 4 kommende Umgebungslicht **55** tritt als Zielobjektbild durch die Austrittsöffnung 52 in das Laserdistanzmessgerät 40 ein und trifft auf das dritte optische Element 49, durch das das Zielobjektbild 55 überwiegend hindurch tritt. Das transmittierte Zielobjektbild **56** trifft auf das erste optische Element 47, wird als reflektiertes Zielobjektbild **57** in Richtung des zweiten optischen Elementes 48 abgelenkt und von dort als Zielobjektbild **58** weiter Richtung Visiereinblick 31 reflektiert. Der Anwender sieht den Lichtpunkt des eingespiegelten Laserstrahls zusammen mit dem Zielobjektbild und kann auf diese Weise den Laserstrahl auf dem Zielobjekt positionieren.

Bei den genannten Laserdistanzmessgeräten befindet sich die Austrittsöffnung für den Laserstrahl in der Vorderseite des Gehäuses und der Visiereinblick der optischen Zieleinrichtung ist in einer Seitenfläche des Gehäuses angeordnet, so dass die Justierung des Laserstrahls mit Hilfe der optischen Zieleinrichtung senkrecht zur optischen Achse des aus dem Gehäuse ausgekoppelten Laserstrahls "quasi über Eck" erfolgt. Die Justierung über Eck bereitet vor allem dem ungeübten Anwender Probleme. Das Stabilisierungssystem des menschlichen Auge-Gehim-Komplexes arbeitet besonders gut, wenn die Justierung parallel zur Ausbreitungsrichtung des ausgekoppelten Laserstrahls erfolgt. Dazu müsste der Visiereinblick bei den bekannten Laserdistanzmessgeräten in der Hinterseite des Gehäuses angeordnet sein. Da sich im Inneren des Laserdistanzmessgerätes neben der Messeinrichtung weitere Komponenten befinden, ist es aus Platzgründen schwierig, zwischen dem Visiereinblick einer optischen Zieleinrichtung in der Hinterseite und der Austrittsöffnung für den Laserstrahl in der Vorderseite einen Strahlengang aufzubauen.

Aus US 5,517,297 ist ein Laserdistanzmessgerät mit einer koaxialen Messeinrichtung und einer optischen Zieleinrichtung bekannt. Die Strahlquelle, der Detektor und der Visiereinblick der optischen Zieleinrichtung sind auf einer gemeinsamen optischen Achse angeordnet. Die Anordnung auf einer gemeinsamen optischen Achse erfordert mehrere Umlenkoptiken und eignet sich nicht für Laserdistanzmessgeräte mit einer koaxialen Messeinrichtung, bei der der Laser- und Empfangsstrahl mit Hilfe einer Strahlteilungsoptik getrennt werden.

Aus US 5,291,263 ist ein Laserdistanzmessgerät mit einer koaxialen Messeinrichtung bekannt, die einen infraroten Laserstrahl aussendet. Ein Teil des infraroten Laserstrahls wird mit einem nicht-linearen optischen Kristall in einen sichtbaren Laserstrahl umgewandelt, wobei der infrarote und der sichtbare Laserstrahl koaxial verlaufen und auf eine als Strahlteiler ausgebildete Umlenkoptik treffen. Die Vorderseite des Strahlteilers ist für den infraroten Laserstrahl vollreflektierend und für sichtbare Strahlung teilreflektierend ausgebildet und die Rückseite des Strahlteilers ist für sichtbare Strahlung mit einer antireflektierenden Beschichtung beschichtet. Nachteilig ist unter anderem, dass die Distanzmessung mit einem infraroten Laserstrahl durchgeführt wird und zur Ausrichtung des Laserstrahls ein weiterer, sichtbarer Laserstrahl erforderlich ist. Die Anordnung eignet sich nicht für ein Laserdistanzmessgerät, bei dem ein sichtbarer Laserstrahl zur Distanzmessung verwendet wird.

Die Aufgabe der vorliegenden Erfindung besteht demgegenüber darin, ein handgehaltenes Lasergerät zur elektrooptischen Distanzmessung bereitzustellen, das auch für ungeübte Anwender eine einfache Ausrichtung des sichtbaren Laserstrahls auf das Zielobjekt mit Hilfe einer optischen Zieleinrichtung erlaubt.

Diese Aufgabe wird bei dem eingangs genannten handgehaltenen Lasergerät zur elektrooptischen Distanzmessung erfindungsgemäß dadurch gelöst, dass die optische Achse des Visiereinblicks koaxial zur optischen Achse des über die Austrittsöffnung aus dem Lasergerät ausgekoppelten sichtbaren Laserstrahls ausgerichtet ist und die Umlenkoptik für einen schmalen Bereich um die Wellenlänge des sichtbaren Laserstrahls λ ± Δλ überwiegend reflektierend und für das vom Zielobjekt kommende Umgebungslicht transmittierend ausgebildet ist.

In einer bevorzugten Ausführung weist die optische Zieleinrichtung ein zweites optisches Element, das für einen schmalen Bereich um die Wellenlänge des Laserstrahls λ ± Δλ überwiegend reflektierend ausgebildet ist, auf.

Besonders bevorzugt ist das zweite optische Element über eine Kommunikationsverbindung mit einer Auswerteeinrichtung der Messeinrichtung verbunden und stellt dem Anwender Zusatzinformationen, bspw. in Form eines Lichtpunktes oder des Distanzwertes, im Zielobjektbild zur Verfügung.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale erfindungsgemäß jeweils einzeln für sich oder zu mehreren in beliebigen Kombinationen Verwendung finden. Die gezeig-ten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a,b: ein bekanntes Laserdistanzmessgerät in einer Ansicht von außen (Fig. 1a) und einer Ansicht von innen (Fig. 1 b);
- Fig. 2: eine weiteres bekanntes Laserdistanzmessgerät;
- Fig. 3: eine erste Ausführungsform eines erfindungsgemäßen Laserdistanzmessge- räts mit einer optischen Zieleinrichtung; und
- Fig. 4: eine zweite Ausführungsform eines erfindungsgemäßen Laserdistanzmessge- räts mit einer optischen Zieleinrichtung.

Gleiche oder funktionsgleiche Elemente werden durch gleiche Bezugszeichen in den Figuren indiziert, soweit nicht anders angegeben.

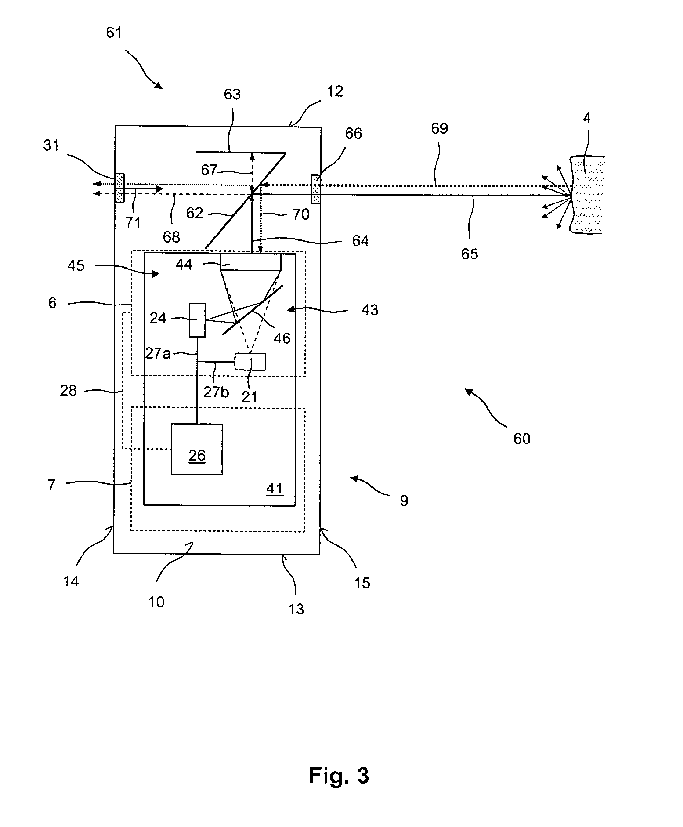

**Fig. 3** zeigt eine erste Ausführungsform eines erfindungsgemäßen Laserdistanzmessgeräts **60** zur elektrooptischen Messung der Distanz des Zielobjektes 4 zu einer Referenzmarke. Das Laserdistanzmessgerät 60 weist neben der Messeinrichtung 41 in koaxialem Aufbau und den Anzeige- und Bedieneinrichtungen 6, 7 eine optische Zieleinrichtung **61** auf. Das Laserdistanzmessgerät 60 unterscheidet sich im Aufbau der optischen Zieleinrichtung 61 von dem in Fig. 1a dargestellten Laserdistanzmessgerät 1, ist ansonsten analog aufgebaut.

Die Messeinrichtung 41 umfasst neben der Sendeeinrichtung 43 mit der Strahlquelle 21 und der Strahlformungsoptik 44, der Empfangseinrichtung 45 mit dem Detektor 24 und der Strahlformungsoptik 44, die Auswerteeinrichtung 26 und den Strahlteiler 46. Der Laserstrahl trifft nach dem Austritt aus der Strahlquelle 21 auf den Strahlteiler 46 und anschließend auf die Strahlformungsoptik 44. Die Strahlquelle 21, bspw. ein Halbleiterlaser oder ein anderer Laser mit einer geeigneten Wellenlänge und Leistung, erzeugt einen Laserstrahl im sichtbaren Spektrum, bspw. einen roten Laserstrahl mit einer Wellenlänge von 635 nm. Der Laserstrahl verlässt die Strahlquelle 21 an einer Öffnung, an der der Laserstrahl gebeugt wird. Aufgrund der Beugung und Divergenz kommt es zu einer Aufweitung des Laserstrahls. Um den Strahldurchmesser des Laserstrahls 3 auf dem Zielobjekt 4 zu begrenzen, wird der Laserstrahl mit Hilfe der Strahlformungsoptik 44 kollimiert oder auf das Zielobjekt 4 fokussiert. Der Detektor 24 ist bspw. eine Fotodiode oder ein anderer an die Wellenlänge und die Leistung der Strahlquelle 21 angepasster Empfänger. Der vom Zielobjekt 4 reflektierte oder gestreute Empfangsstrahl 5 wird mit Hilfe der Strahlformungsoptik 44 auf den Detektor 24 fokussiert. Die Auswerteeinrichtung 26 ist über die Kommunikationsverbindungen 27a, 27b mit dem Detektor 24 und der Strahlquelle 21 verbunden und bestimmt aus der Zeitdifferenz zwischen dem von der Strahlquelle ausgesandten Laserstrahl und dem vom Detektor 24 erfassten Empfangsstrahl den Distanzwert zum Zielobjekt 4. Über die Kommunikationsverbindung 28 ist die Auswerteeinrichtung 26 mit der Anzeigeeinrichtung 6, die den gemessenen Distanzwert anzeigt, verbunden.

Die optische Zieleinrichtung 61 weist ein erstes optisches Element **62** und ein zweites optisches Element **63** auf. Der Anwender sieht über den Visiereinblick 31 in der Seitenfläche 14 in die optische Zieleinrichtung 61. Dabei sieht er auf das erste optische Element 62. Das erste optische Element 62 ist als Strahlteiler ausgebildet und im Strahlengang des aus der Messeinrichtung 41 ausgekoppelten Laserstrahls unter 45° Neigung zur optischen Achse angeordnet.

Der aus der Messeinrichtung 41 über die Strahlformungsoptik 44 ausgekoppelte Laserstrahl **64** trifft auf das erste optische Element 62 der optischen Zieleinrichtung 61, das für die Laserwellenlänge überwiegend reflektierend ausgebildet ist (z.B. Reflexionsgrad R ≥ 95 %), so dass der überwiegende Teil des Laserstrahls 64 als reflektierter Laserstrahl **65** das Laserdistanzmessgerät 60 über eine Austrittsöffnung **66** in der Seitenfläche 15 verlässt und ein geringer Teil als transmittierter Laserstrahl **67** durch das erste optische Element 62 hindurch tritt. Im Strahlengang des transmittierten Laserstrahls 67 ist das zweite optische Element 63 angeordnet, das für die Laserwellenlänge λ überwiegend reflektierend ausgebildet ist. Der transmittierte Laserstrahl 67 wird am zweiten optischen Element 63 in sich selbst reflektiert und trifft auf das erste optische Element 62. Dort wird der überwiegende Teil des Laserstrahls 67 als reflektierter Laserstrahl **68** in Richtung des Visiereinblicks 31 abgelenkt. Der reflektierte Laserstrahl 68 erscheint dem Anwender als scharfer Lichtpunkt und zeigt ihm die genaue Position des Laserstrahls 65 auf dem Zielobjekt 4 an.

Der über die Austrittsöffnung 66 aus dem Laserdistanzmessgerät 60 ausgetretene Laserstrahl 65 trifft auf das Zielobjekt 4. Am Zielobjekt 4 wird ein Teil des Laserstrahls 65 reflektiert und ein Teil diffus gestreut. Der reflektierte Laserstrahl und ein Teil des gestreuten Laserstrahls treten als Empfangsstrahl **69** über die Austrittsöffnung 66 in das Laserdistanzmessgerät 60 ein. Der Empfangsstrahl 69 trifft auf das erste optische Element 62, das für einen schmalen Wellenlängenbereich ±Δλ um die Laserwellenlänge λ herum überwiegend reflektierend und für andere Wellenlängen überwiegend transmittierend ausgebildet ist. Am ersten optischen Element 62 wird der überwiegende Teil des Empfangsstrahls 69 als reflektierter Empfangsstrahl 70 in Richtung der Strahlformungsoptik 44 abgelenkt, trifft auf die Strahlformungsoptik 44 und wird in Richtung des Strahlteilers 46 fokussiert und über den Strahlteiler 46 auf den Detektor 24 abgebildet. Das Umgebungslicht mit dem Zielobjektbild tritt bis auf einen schmalen Wellenlängenbereich um die Laserwellenlänge λ herum durch das erste optische Element 62 hindurch und erreicht über den Visiereinblick 31 das Auge des Anwenders. Der Anwender sieht das Zielobjektbild zusammen mit dem Lichtpunkt des reflektierten Laserstrahls 68, der sich im Zielobjektbild an derselben Position befindet wie der Laserstrahl auf dem Zielobjekt 4.

Da der Anwender direkt in den Laserstrahl 68 schaut, sind die Transmissions- und Reflexionsgrade des ersten optischen Elementes 62 und des zweiten optischen Elementes 63 der optischen Zieleinrichtung 61 so angepasst, dass die Leistung, die das Auge des Anwenders erreicht, sehr stark gedämpft wird, um eine Schädigung des Auges sowie eine Überstrahlung des Zielobjektbildes zu verhindern. Alternativ kann ein Filter eingesetzt werden, der die Leistung des Laserstrahls 68 abschwächt.

Der Visiereinblick 31 und die Austrittsöffnung 66 für den Laserstrahl 65 sind auf den gegenüberliegenden Seitenflächen 14, 15 des Gehäuses 9 angeordnet. Die Richtung, in der der Anwender in den Visiereinblick 31 schaut, wird durch einen Richtungsvektor (Pfeil **71**) angezeigt. Die Richtung 71, in die der Anwender in den Visiereinblick 31 der optischen Zieleinrichtung schaut, ist koaxial zur optischen Achse des über die Austrittsöffnung 66 aus dem Laserdistanzmessgerät 60 ausgekoppelten Laserstrahls ausgerichtet. Durch die koaxiale Anordnung sieht der Anwender in die Ausbreitungsrichtung des Laserstrahls. Das Stabilisierungssystem des menschlichen Auge-Gehirn-Komplexes ermöglicht eine einfache und genaue Ausrichtung und Positionierung des Laserstrahls auf dem Zielobjekt.

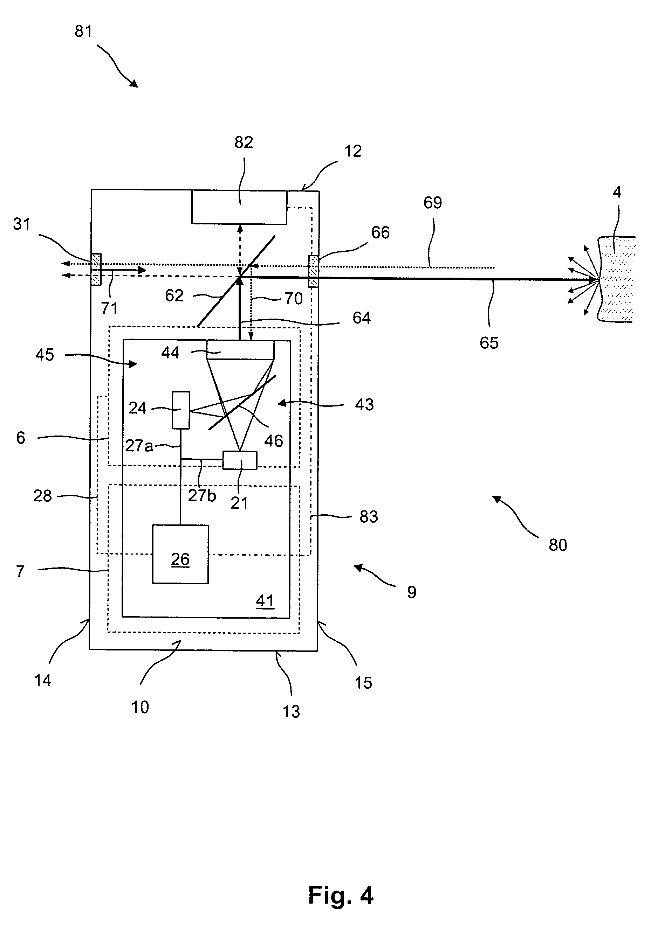

**Fig. 4** zeigt eine zweite Ausführungsform eines erfindungsgemäßen Laserdistanzmessgeräts **80** zur elektrooptischen Messung der Distanz des Zielobjektes 4 zu einer Referenzmarke, das sich durch den Aufbau der optischen Zieleinrichtung **81** von der ersten Ausführungsform 60 eines erfindungsgemäßen Laserdistanzmessgeräts unterscheidet, ansonsten analog aufgebaut ist.

Das Laserdistanzmessgerät 80 umfasst neben der optischen Zieleinrichtung 81 die Mess-, Anzeige- und Bedieneinrichtungen 41, 6, 7, die auch im Laserdistanzmessgerät 60 enthalten sind. Die optische Zieleinrichtung 81 besteht aus zwei optischen Elementen, dem ersten optischen Element 62 und einem zweiten optischen Element **82.** Das erste optische Element 62 ist als Strahlteiler mit einem hohen Reflexionsgrad (bspw. R ≥ 95 %) für die Laserwellenlänge λ und einem hohen Transmissionsgrad für alle anderen Wellenlängen des sichtbaren Spektrums ausgebildet.

Der überwiegende Teil des aus der Messeinrichtung 41 über die Strahlformungsoptik 44 ausgekoppelten Laserstrahls 64 wird am ersten optischen Element 62 als reflektierter Laserstrahl 65 in Richtung Zielobjekt 4 abgelenkt. Der Empfangsstrahl 69 trifft auf das erste optische Element 62, an dem der überwiegende Teil des Empfangsstrahls 69 als reflektierter Empfangsstrahl 70 in Richtung der Messeinrichtung 41 abgelenkt wird. Das Bild des Zielobjektes 4 erreicht, wie für das Laserdistanzmessgerät 60 beschrieben, über das erste optische Element 62 das Auge des Anwenders. Des Weiteren wird vom zweiten optischen Element 82 eine Feldverteilung erzeugt, die über das erste optische Element 62 in Richtung des Visiereinblicks 31 reflektiert wird. Der Anwender nimmt diese Feldverteilung einerseits als scharfen Lichtpunkt wahr, der sich an derselben Position im Bild des Zielobjektes 4 befindet wie der Laserstrahl auf dem Zielobjekt 4, so dass eine genaue Positionierung des Laserstrahls auf dem Zielobjekt 4 möglich ist. Andererseits sieht der Anwender durch diese Feldverteilung Zusatzinformationen, wie z.B. den Distanzmesswert im Zielobjektbild. Das zweite optische Element 82 ist über eine Kommunikationsverbindung **83** mit der Auswerteeinrichtung 26 der Messeinrichtung 41 verbunden.

Das zweite optische Element 82 der optischen Zieleinrichtung 81 besteht aus einem Mikrodisplay, dessen Anzeige über eine Linse ins Unendliche transformiert wird. Dieses transformierte Bild wird vom Anwender als Anzeigeinhalt wahrgenommen.

## Patentansprüche

1. Handgehaltenes Lasergerät (60; 80) zur elektrooptischen Messung der Distanz eines Zielobjektes (4) zu einer Referenzmarke (10-15, 18) bestehend aus einem Gehäuse (9), wobei das Gehäuse (9) eine Austrittsöffnung (66) zum Auskoppeln eines Laserstrahls (65) aus dem Lasergerät (60; 80) aufweist, einer koaxialen Messeinrichtung (41) mit einer Strahlquelle (21), einem Detektor (24), einer Strahlformungsoptik (44) und einer Strahlteilungsoptik (46), wobei die Messeinrichtung (41) einen sichtbaren Laserstrahl (64) koaxial zu dem von dem Zielobjekt (4) kommenden Empfangsstrahl (70) aussendet und aus dem Empfangsstrahl (70) einen Distanzwert ermittelt, einer Anzeigeeinrichtung (6) zur Anzeige des Distanzwertes, einer Bedieneinrichtung (7) zur Bedienung des Lasergerätes (60; 80) und zum Start der Distanzmessung und einer optischen Zieleinrichtung (61; 81) zur Ausrichtung des Laserstrahls (65) auf das Zielobjekt (4), wobei die optische Zieleinrichtung (61; 81) einen Visiereinblick (31), über den ein Anwender in die optische Zieleinrichtung (61; 81) schaut, und eine Umlenkoptik (62), die den von der Messeinrichtung (41) ausgesandten Laserstrahl (64) in Richtung der Austrittsöffnung (66) umlenkt, aufweist, wobei die optische Achse des Visiereinblicks (31) koaxial zur optischen Achse des über die Austrittsöffnung (66) aus dem Lasergerät (60; 80) ausgekoppelten sichtbaren Laserstrahls (65) ausgerichtet ist,
**dadurch gekennzeichnet, dass**
die Umlenkoptik (62) für einen schmalen Bereich um die Wellenlänge des sichtbaren Laserstrahls (64, 65) λ ± Δλ überwiegend reflektierend und für das vom Zielobjekt (4) kommende Umgebungslicht bis auf den schmalen Bereich um die Wellenlänge des sichtbaren Laserstrahls (64, 65) λ ± Δλ transmittierend ausgebildet ist.

2. Lasergerät nach Anspruch 1, **dadurch gekennzeichnet, dass** die optische Zieleinrichtung (61; 81) ein zweites optisches Element (63; 82), das für einen schmalen Bereich um die Wellenlänge des Laserstrahls (64, 65) λ ± Δλ überwiegend reflektierend ausgebildet ist, aufweist.

3. Lasergerät nach Anspruch 2, **dadurch gekennzeichnet, dass** das zweite optische Element (82) über eine Kommunikationsverbindung (83) mit einer Auswerteeinrichtung (26) der Messeinrichtung (41) verbunden ist und dem Anwender Zusatzinformationen im Zielobjektbild zur Verfügung stellt.

4. Lasergerät nach Anspruch 3, **dadurch gekennzeichnet, dass** die Zusatzinformationen einen Lichtpunkt darstellen.

5. Lasergerät nach Anspruch 3, **dadurch gekennzeichnet, dass** die Zusatzinformationen einen Distanzwert darstellen.

## Claims

1. Hand-held laser device (60; 80) for electro-optically measuring the distance of a target object (4) from a reference mark (10-15, 18), consisting of a housing (9) with an outlet window (66) for decoupling a laser beam (65) out from the laser device (60; 80), a coaxial measuring device (41) with beam source (21), detector (24), beam former (44) and beam splitter (46), the measuring device (41) emitting a visible laser beam (64) coaxially with the received beam (70) coming from the target object (4) and computing a distance value from the received beam (70), a display device (6) for displaying the distance value, a control device (7) for operating the laser device (60; 80) and initiating the distance measurement, and an optical aiming device (61; 81) for training the laser beam (65) on the target object (4), the aiming device (61; 81) having a sighting window (31) through which the user looks into the optical aiming device (61; 81) and an optical deflector (62) which deflects the laser beam (64) emitted by the measuring device (41) towards the outlet window (66), the optical axis of the sighting window (31) being aligned coaxially with the optical axis of the visible laser beam (65) decoupled out from the laser device (60; 80) through the outlet window (66),
**characterized in that**
the optical deflector (62) is configured so as to be predominantly reflecting for a narrow band *lambda* ± *delta lambda* around the wavelength of the visible laser beam (64, 65) and transmitting for the ambient light coming from the target object (4) except for the narrow band *lambda* ± *delta lambda* around the wavelength of the visible laser beam (64, 65).

2. Laser device according to Claim 1, **characterized in that** the optical aiming device (61; 81) has a second optical element (63; 82) configured so as to be predominantly reflecting for a narrow band *lamba* ± *delta lambda* around the wavelength of the laser beam (64, 65).

3. Laser device according to Claim 2, **characterized in that** the second optical element (82) is connected via a communication connection (83) to an evaluation device (26) of the measuring device (41) and provides the user with additional information in the image of the target object.

4. Laser device according to Claim 3, **characterized in that** the additional information appears in the form of a light spot.

5. Laser device according to Claim 3, **characterized in that** the additional information appears in the form of a distance value.

## Revendications

1. Appareil laser (60 ; 80) tenu à la main pour la mesure électro-optique de la distance d'un objet de cible (4) à une marque de référence (10-15, 18) se composant d'un boîtier (9), le boîtier (9) comportant une ouverture de sortie (66) pour le découplage d'un rayon laser (65) de l'appareil laser (60 ; 80), un dispositif de mesure (41) coaxial avec une source de rayonnement (21), un détecteur (24), une optique de formation de rayonnement (44) et une optique de division de rayonnement (46), le dispositif de mesure (41) envoyant un rayon laser (64) visible coaxialement au rayon de réception (70) arrivant de l'objet de cible (4) et déterminant une valeur de distance à partir du rayon de réception (70), un dispositif d'affichage (6) pour l'affichage de la valeur de distance, un dispositif d'utilisation (7) pour l'utilisation de l'appareil laser (60 ; 80) et pour le démarrage de la mesure de distance et un dispositif de ciblage optique (61 ; 81) pour l'orientation du rayon laser (65) sur l'objet de cible (4), le dispositif de ciblage optique (61 ; 81) présentant un oeilleton de visée (31) grâce auquel un utilisateur regarde dans le dispositif de ciblage optique (61 ; 81), et une optique de déviation (62), laquelle dévie le rayon laser (64) envoyé par le dispositif de mesure (41) en direction de l'ouverture de sortie (66), l'axe optique de l'oeilleton de visée (31) étant orienté coaxialement à l'axe optique du rayon laser (65) visible découplé de l'appareil laser (60 ; 80) à travers l'ouverture de sortie (66), **caractérisé en ce que**
l'optique de déviation (62) est réalisée de manière essentiellement réfléchissante pour une plage étroite autour de la longueur d'onde du rayon laser (64, 65) λ±Δλ visible, et de manière transmissive pour la lumière environnante arrivant de l'objet de cible (4) à l'exception de la plage étroite autour de la longueur d'onde du rayon laser (64, 65) visible λ±Δλ.

2. Appareil laser selon la revendication 1, **caractérisé en ce que** le dispositif de ciblage optique (61 ; 81) présente un deuxième élément optique (63 ; 82), lequel est réalisé de manière essentiellement réfléchissante pour une plage étroite autour de la longueur d'onde du rayon laser (64, 65) λ±Δλ.

3. Appareil laser selon la revendication 2, **caractérisé en ce que** le deuxième élément optique (82) est relié via une liaison de communication (83) à un dispositif d'évaluation (26) du dispositif de mesure (41) et met à disposition des informations supplémentaires pour l'utilisateur dans l'image d'objet de cible.

4. Appareil laser selon la revendication 3, **caractérisé en ce que** les informations supplémentaires représentent un point lumineux.

5. Appareil laser selon la revendication 3, **caractérisé en ce que** les informations supplémentaires représentent une valeur de distance.
